# DEMANDE DE BREVET EUROPEEN

(11) **EP 1 190 873 A1**
(43) Date de publication de la demande: **27.03.2002**
(21) Numéro de dépôt: 01400943.5
(22) Date de dépôt: 12.04.2001
(51) Int. Cl.: B60C 17/04

(54) **Systeme de roulage a plat pour vehicule automobile**

(30) Priorité: 22.09.2000 FR 0012085
(71) Demandeur: HUTCHINSON, 75008 Paris (FR)
(72) Inventeur: Heuze, Olivier, 95290 l'Isle Adam (FR); Michelot, Eric, 95000 Cergy (FR); Carpentier, Eric, 95660 Champagne/Oise (FR)
(74) Mandataire: Doireau, Marc

(57) **Abrégé**

Système de roulage à plat pour véhicule automobile, comprenant une jante monobloc non standard (1) présentant au moins une première cavité périphérique ou creux de jante (11) pour permettre le montage d'un pneumatique (P) sur la jante (1), et un dispositif de roulage à plat (5) destiné à être monté sur la jante (1) et à l'intérieur du pneumatique (P), ce dispositif (5) étant constitué d'un anneau rigide scindé en au moins deux éléments en arc de cercle ou secteurs (20), caractérisé en ce que la jante (1) présente au moins une seconde cavité périphérique (17) qui est séparée de la première cavité (11) par un bossage périphérique intermédiaire (19), en ce que chaque secteur (20) de l'anneau présente une partie radialement interne (A) destinée à venir se loger dans la seconde cavité (17) de la jante (1), et en ce que le système comprend également des moyens de fixation des secteurs (20) dans la seconde cavité (17) de la jante (1).

## Description

L'invention concerne un système de roulage à plat pour véhicule automobile, un tel système permettant au véhicule de parcourir une distance importante à vitesse relativement élevée avec un pneumatique sans chambre à air partiellement ou totalement dégonflé.

D'une manière générale, pour équiper les véhicules du secteur civil, les dispositifs de roulage à plat doivent pouvoir être montés sur des jantes de roue standard, c'est-à-dire des jantes monoblocs à creux de jante (ou "drop center" en langue anglaise).

Les dispositifs de roulage à plat connus actuellement sont généralement constitués par un anneau de roulage qui est monté serré autour de la jante de roue à l'intérieur du pneumatique. Cet anneau est formé soit d'une seule pièce relativement souple à laquelle on a retiré une tranche, soit d'au moins deux pièces rigides en arc de cercle ou secteurs. Pour assurer un montage serré de l'anneau autour de la jante, il est nécessaire de prévoir une connectique d'assemblage et de serrage entre les deux extrémités en vis-à-vis des secteurs de l'anneau. Les connectiques d'assemblage et de serrage sont rigides et constitués d'éléments mécaniques tels que vis-écrou par exemple.

Or, l'expérience montre que ces connectiques rigides sont l'élément fragile des dispositifs de roulage à plat (phénomènes de fatigue par exemple). Par ailleurs, le montage d'un dispositif de roulage à plat est une opération qui nécessite une formation de l'opérateur compte-tenu notamment de l'espace réduit pour le passage de l'outil nécessaire au serrage de l'anneau sur la jante.

Selon le document FR-97 13618 au nom de la Demanderesse, le dispositif de roulage à plat est constitué de manière à supprimer la connectique d'assemblage et de serrage. Il comprend au moins un anneau interne ouvert en matière relativement rigide, destiné à être monté sur la jante, et un anneau extérieur continu et sensiblement inextensible, emboîté sur le précédent pour le serrer et le fixer sur la jante.

Selon un perfectionnement envisagé dans le document FR-98 04225, également au nom de la Demanderesse, l'anneau est constitué de trois pièces, à savoir :
- deux premières pièces annulaires, ouvertes sur une tranche et destinées à être montées l'une sur l'autre autour de la jante, et
- une troisième pièce annulaire continue et coaxiale aux deux précédentes, cette troisième pièce assurant le serrage sur la jante du système ainsi formé.

On connaît également des dispositifs de roulage à plat qui sont conçus pour être montés sur des jantes non standards en deux parties, et dans lesquels on utilise les moyens de fixation des deux parties de la jante pour fixer également les secteurs de l'anneau.

Un but de l'invention est également de s'affranchir notamment des connectiques d'assemblage et de serrage des secteurs d'un anneau de roulage à plat entre eux sur une jante non standard monobloc.

A cet effet, l'invention propose un système de roulage à plat pour véhicule automobile, comprenant une jante monobloc non standard présentant au moins une première cavité périphérique ou creux de jante pour permettre le montage d'un pneumatique sur la jante, et un dispositif de roulage à plat destiné à être monté sur la jante et à l'intérieur du pneumatique, ce dispositif étant constitué d'un anneau rigide scindé en au moins deux éléments en arc de cercle ou secteurs, caractérisé en ce que la jante présente au moins une seconde cavité périphérique qui est séparée de la première cavité par un bossage périphérique intermédiaire, en ce que chaque secteur de l'anneau présente une partie radialement interne destinée à venir se loger dans la seconde cavité, et en ce que le système comprend également des moyens de fixation des secteurs dans la seconde cavité de la jante.

Selon une autre caractéristique de l'invention, les moyens de fixation des secteurs de l'anneau sur la jante comprennent des premiers moyens pour reprendre les efforts latéraux qui auraient tendance à déplacer les secteurs latéralement à l'intérieur de la seconde cavité.

Avantageusement, les premiers moyens de fixation sont constitués par des cales propres à pénétrer dans la seconde cavité de la jante afin de s'engager entre le bossage intermédiaire et au moins un secteur de l'anneau pour agir à la manière d'un coin et immobiliser latéralement l'ensemble des secteurs de l'anneau.

Selon un mode de réalisation de l'invention, les cales sont portées par les secteurs de l'anneau et sont montées pivotantes.

Les moyens de fixation des secteurs de l'anneau sur la jante comprennent également des seconds moyens pour reprendre les efforts transversaux ou efforts de centrifugation qui auraient tendance à faire sortir les secteurs hors de la seconde cavité de la jante.

Les seconds moyens de fixation des secteurs de l'anneau sur la jante comprennent au moins un talon prévu dans la partie radialement interne de chaque secteur, et une gorge ménagée dans la seconde cavité de la jante et dans laquelle vient s'engager ledit talon.

Avantageusement, les seconds moyens de fixation des secteurs de l'anneau sur la jante comprennent deux talons prévus dans la partie radialement interne de chaque secteur, et deux gorges ménagées dans la seconde cavité de la jante et dans lesquelles viennent respectivement s'engager les deux talons.

Un système de roulage à plat selon l'invention présente de nombreux avantages parmi lesquels on peut notamment citer :
- l'absence d'une quelconque connectique d'assemblage et de serrage entre deux secteurs consécutifs de l'anneau, ce qui permet d'alléger la structure de l'anneau et de réduire au minimum l'écartement entre deux secteurs consécutifs de l'anneau,
- une facilité de montage des secteurs de l'anneau autour de la jante qui ne requiert aucun outillage spécifique,
- des moyens de fixation des secteurs de l'anneau sur la jante qui ne font intervenir aucun élément venant se visser dans la jante et qui viendrait affaiblir sa résistance mécanique.

D'autres avantages, caractéristiques et détails de l'invention ressortiront de la description explicative qui va suivre en référence à des dessins annexés, donnés uniquement à titre d'exemple et dans lesquels :
- la figure 1 est une demi-vue en coupe axiale d'une jante monobloc non standard, d'un pneumatique et d'un dispositif de roulage à plat d'un système selon l'invention et avant assemblage de ces éléments,
- la figure 2 est une vue en coupe d'un secteur de l'anneau du dispositif de roulage à plat,
- la figure 3 est une vue suivant la flèche III de la figure 2,
- les figures 4 à 13 sont des demi-vues en coupe axiale pour illustrer le montage du système de roulage à plat selon l'invention,
- la figure 14 est une demi-vue en coupe axiale d'une première variante du système de roulage à plat selon l'invention, et
- la figure 15 est une demi-vue en coupe axiale d'une seconde variante du système de roulage à plat selon l'invention.

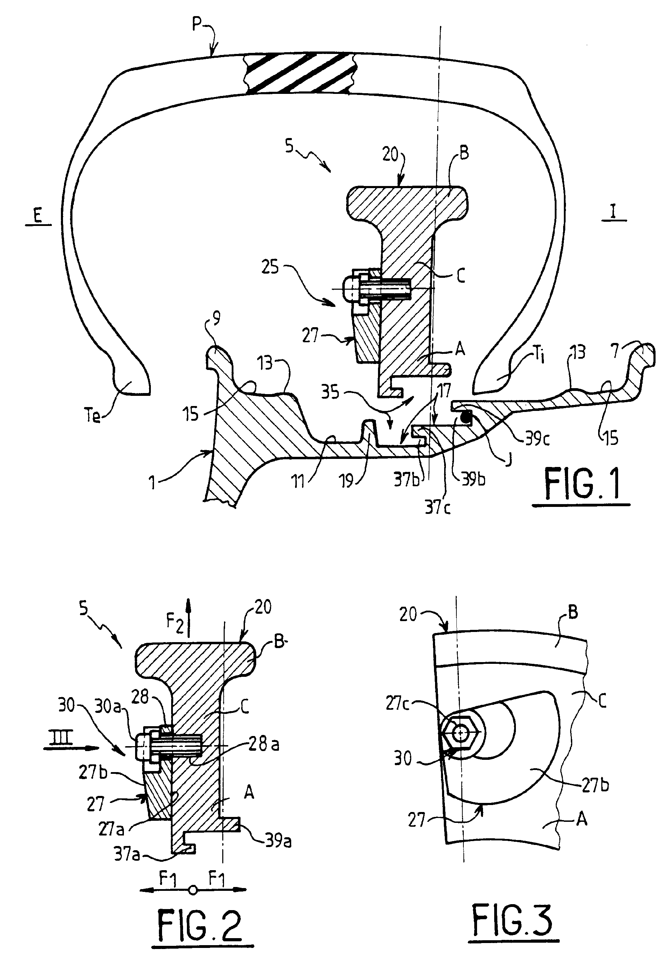

Un système de roulage à plat selon l'invention comprend notamment une jante monobloc non standard 1, un pneumatique P et un dispositif de roulage à plat 5, qui sont représentés sur la figure 1 avant leur assemblage.

Si on considère le véhicule automobile, la jante 1 et le pneumatique P présentent un côté interne I et un côté externe E, et on utilisera les adjectifs interne et externe dans la suite du texte en référence à ces deux côtés.

D'une manière générale et en se référant à la figure 1, la jante 1 est une pièce annulaire monobloc qui présente des points communs avec une jante standard, à savoir :
- deux rebords périphériques interne 7 et externe 9 ou rebords de jante,
- un creux de jante 11 (ou "drop center" en langue anglaise) dans sa partie centrale, ce creux de jante 11 formant une première cavité périphérique externe, et
- deux bossages périphériques 13 (ou "hump" en langue anglaise), qui sont respectivement adjacents aux deux rebords périphériques 7 et 9 pour délimiter deux puits 15 destinés à recevoir les deux talons interne Ti et externe Te du pneumatique P, une fois ce dernier gonflé.

Par ailleurs, selon une caractéristique commune à tous les modes de réalisation de l'invention qui vont être décrits, la jante 1 présente au moins une seconde cavité périphérique interne 17, coaxiale à la première cavité 11 et qui est séparée de celle-ci par un rebord périphérique intermédiaire 19.

D'une manière générale et en se référant à la figure 2, le dispositif de roulage à plat 5 est constitué par un anneau rigide qui est scindé en au moins deux éléments en arc de cercle ou secteurs 20. Les secteurs 20 de l'anneau sont indépendants les uns des autres et rapportés séparément autour de la jante 1 sans aucune connectique de liaison pour assembler les secteurs entre eux. Avantageusement, l'anneau peut être fabriqué d'une seule pièce puis scindé en plusieurs secteurs 20 avec un outil de coupe, une scie par exemple, pour limiter au maximum l'écartement qui pourrait exister entre les secteurs une fois qu'ils sont rapportés autour de la jante 1.

Le nombre des secteurs 20 de l'anneau peut varier notamment en fonction des dimensions relatives de l'anneau par rapport à celles du pneumatique P. L'anneau peut être fabriqué en aluminium, mais de préférence en une matière plastique du type polyamide éventuellement chargée de fibres de verre par exemple pour renforcer sa tenue mécanique et thermique. Chaque secteur 20 de l'anneau peut comporter sur sa périphérique extérieure un revêtement de caoutchouc formant une bande de roulement en contact souple avec le pneumatique P en cas de roulage à plat, en particulier lorsque les secteurs sont en aluminium.

Chaque secteur 20 de l'anneau présente une zone centrale C ou poutre, une zone radialement interne A et une zone radialement externe B dont la périphérie forme la surface de roulage à plat sur laquelle vient prendre appui la bande de roulement du pneumatique en cas de crevaison et qui peut former une excroissance (non représenté), côté extérieur, pour limiter le débattement latéral du pneumatique P.

Le système selon l'invention comprend également des moyens de fixation des secteurs 20 dans la seconde cavité 17 de la jante 1.

En référence aux figures 1 à 3, les moyens de fixation comprennent au moins des premiers moyens 25 pour reprendre les efforts latéraux (suivant les flèches F1 de la figure 2) qui auraient tendance à déplacer latéralement les secteurs 20 de l'anneau à l'intérieur de la seconde cavité 17.

Ces premiers moyens 25 sont constitués par des cales 27 qui sont destinées à pénétrer dans la seconde cavité 17 de la jante 1 afin de s'engager entre le bossage intermédiaire 19 et les secteurs 20 de l'anneau pour agir à la manière d'un coin et immobiliser latéralement l'ensemble des secteurs 20 de l'anneau dans la seconde cavité 17.

Dans l'exemple illustré sur les figures 1 à 3, les cales 27 sont avantageusement portées par les secteurs 20 de l'anneau et sont montées pivotantes. Plus précisément, chaque cale 27 présente une face d'appui 27a destinée à venir s'appliquer sur la face externe de la poutre C d'un secteur 20 de l'anneau en épousant sa forme, et une face opposée 27b qui présente une pente qui permet de diminuer progressivement l'épaisseur de la cale 27 d'une extrémité vers l'autre pour former un coin.

Dans sa partie de plus grande épaisseur, chaque cale 27 est percée de part en part par une ouverture 28 qui reçoit un élément 30 pour la fixer à un secteur 20 d'une part et lui servir d'axe de pivot d'autre part. Cet élément 30 peut être une tige qui est emmanchée à force au travers de l'ouverture 28 dans un trou borgne 28a percé dans le secteur 20, et qui se termine par un épaulement 30a pour assurer la fixation de la cale 27 au secteur 20. Afin d'assurer le pivotement de la cale 27 à l'aide d'une simple clé, la cale 27 est pourvue d'une forme hexagonale en relief 27c. Cette forme 27c peut être rapportée par soudage ou par usinage par exemple. En variante, cet élément 30 peut être constitué par une vis qui est serrée une fois la cale 27 en position dans la seconde cavité 17 de la jante 1.

D'une manière générale, le nombre des cales 27 varie en fonction du nombre des secteurs 20, sachant qu'un secteur peut porter une ou plusieurs cales, ou aucune. En particulier, une cale 27 peut être montée vers une extrémité latérale d'un secteur 20 de manière à pouvoir être utilisée pour pouvoir chevaucher et immobiliser simultanément deux secteurs consécutifs 20 dans la seconde cavité 17 de la jante 1.

Ainsi, dans le cas d'un anneau scindé en deux secteurs 20, il y aura lieu de prévoir quatre cales 27, à savoir deux cales destinées à chevaucher les extrémités adjacentes des deux secteurs et une cale dans la partie centrale de chaque secteur. Par contre, dans le cas d'un anneau scindé en trois secteurs, on peut n'utiliser que trois cales qui chevauchent les extrémités adjacentes des trois secteurs.

D'une manière générale, les cales 27 sont rigides et réalisées en acier, en aluminium ou en une matière plastique renforcée.

Les moyens de fixation comprennent également des seconds moyens 35 pour reprendre les efforts transversaux (suivant la flèche F2 de la figure 2) qui auraient tendance à faire sortir les secteurs 20 de l'anneau hors de la seconde cavité 17 de la jante 1.

Les seconds moyens 35 comprennent au moins un talon prévu dans la zone radialement interne A de chaque secteur 20, et une gorge latérale ménagée dans la seconde cavité 17 de la jante 1 et dans laquelle vient s'engager le talon.

Dans l'exemple illustré sur les figures 1 et 2, la zone radialement interne A de chaque secteur 20 de l'anneau présente avantageusement deux talons latéraux 37a et 39a en arc de cercle, en forme de L, et qui sont respectivement destinés à s'engager dans deux gorges latérales 37b et 39b de la seconde cavité 17 de la jante 1.

Plus précisément, le talon 37a est situé à l'extrémité de la zone radialement interne A du secteur 20 de l'anneau et du côté externe du secteur, alors que le talon 39a fait saillie du côté interne du secteur 20 de l'anneau. Autrement dit, ces deux talons 37a et 39a sont avantageusement décalés l'un par rapport à l'autre pour éviter le basculement des secteurs 20 de l'anneau, c'est-à-dire assurer une meilleure reprise des efforts transversaux.

Les deux gorges latérales 37b et 39b sont ménagées dans la paroi latérale interne de la seconde cavité 17 de la jante 1, alors que la paroi latérale externe de la seconde cavité 17 est formée par le bord latéral interne du bossage intermédiaire 19. Les deux gorges 37b et 39b sont délimitées par deux bossages périphériques successifs 37c et 39c de la jante, et sont axialement décalées l'une par rapport à l'autre pour recevoir les deux talons 37a et 39a des secteurs 20.

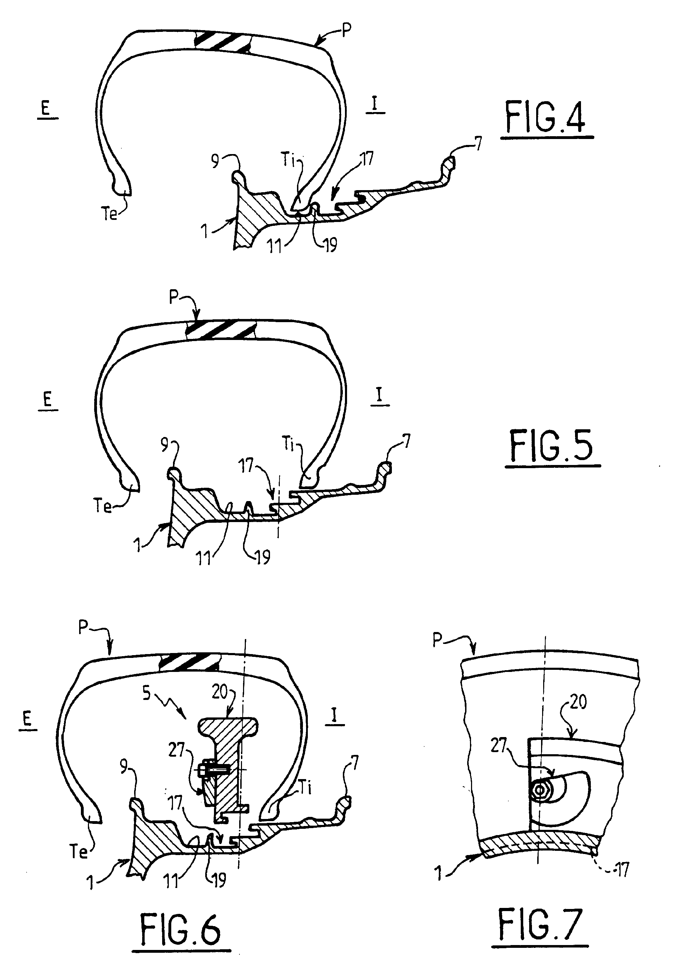

On va décrire ci-après le montage du système selon l'invention en se référant successivement aux figures 4 à 13.

Sur la figure 4, on monte partiellement le pneumatique P sur la jante 1 en ne passant que le talon interne Ti sur la jante 1 en s'aidant de la première cavité 11 ou creux de jante, la présence de ce creux de jante étant nécessaire pour permettre aux talons Ti et Te du pneumatique P de passer le rebord 9 de la jante 1.

Sur la figure 5, on a dégagé le talon interne Ti du creux de jante 11 mais le talon externe Te du pneumatique P reste à l'extérieur de la jante 1 de manière à pouvoir introduire le dispositif de roulage à plat 5.

Sur les figures 6 et 7, on a introduit les secteurs 20 du dispositif de roulage à plat 5 à l'intérieur du pneumatique P et autour de la jante 1, et les cales 27 (figure 7) occupent une première position dite de retrait de manière à ne pas gêner le positionnement des secteurs 20 autour de la jante 1.

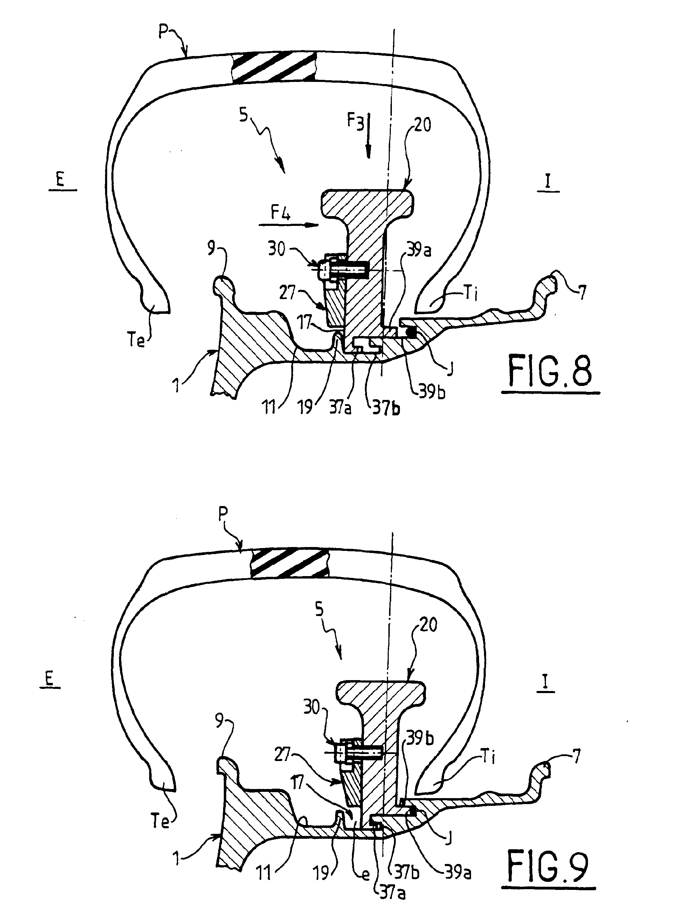

Sur la figure 8, chaque secteur 20 de l'anneau est déplacé suivant la flèche F3 de manière à faire pénétrer sa partie radialement interne A dans la seconde cavité 17 de la jante 1, puis suivant la flèche F4 pour engager les deux talons 37a et 39a dans les gorges latérales 37b et 39b de la seconde cavité 17 de la jante 1. Il en résulte le dégagement d'un espace annulaire e entre les secteurs 20 et le bossage intermédiaire 19 de la jante 1 pour le passage des cales 27, comme cela est illustré sur la figure 9.

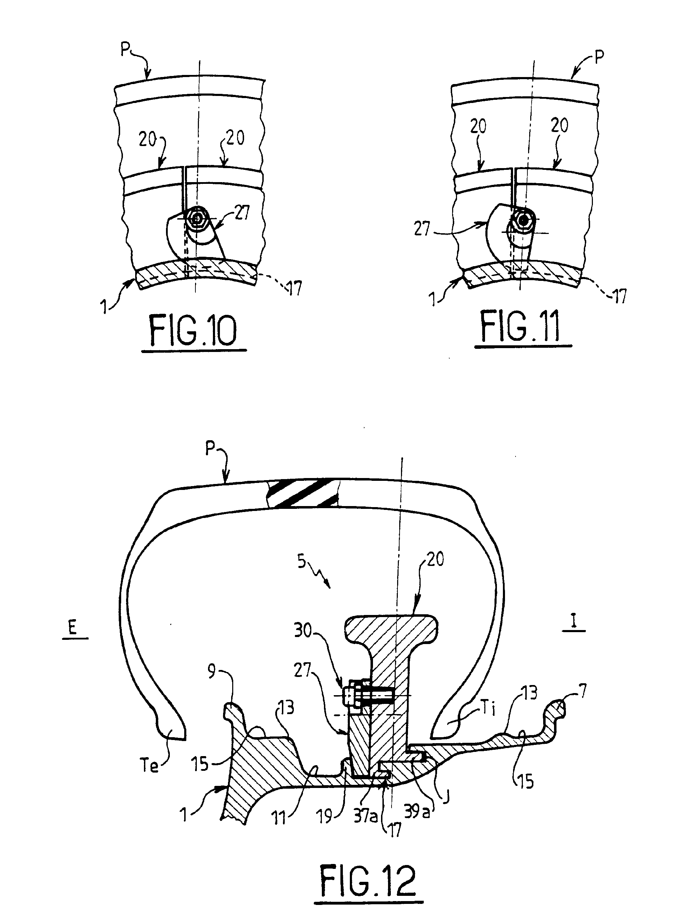

Sur la figure 10, on a fait pivoter une cale 27 au moyen d'une clé suivant un premier angle pour l'engager en partie dans l'espace e et assurer ainsi un blocage minimum du secteur 20. Dans cet exemple, la cale 27 est située vers une extrémité d'un secteur 20 de manière à pouvoir venir chevaucher le secteur consécutif.

Sur les figures 11 et 12, on a poursuivi le pivotement de la cale 27 pour assurer un blocage maximum. Afin de compenser les tolérances de fabrication et assurer un blocage latéral satisfaisant des secteurs 20 dans la seconde cavité 17 de la jante 1, on vient placer au moins un joint torique J dans le fond de la gorge 39b par exemple et qui va être comprimé par suite du positionnement des cales 27 dans l'espace e.

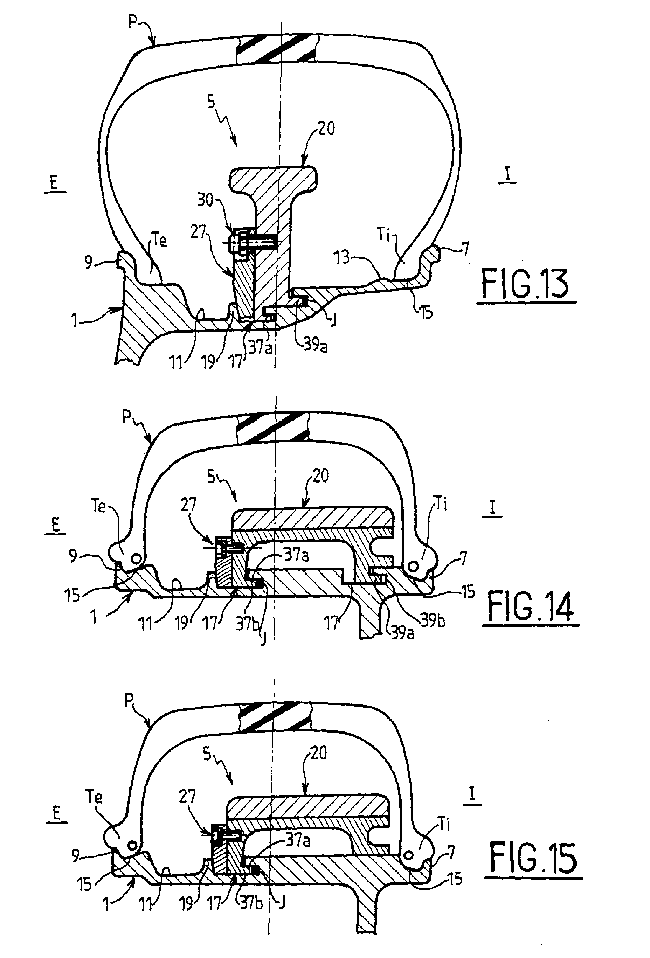

Enfin, sur la figure 13, on a monté le talon extérieur Te du pneumatique P dans le creux de la jante 11, et procédé ensuite au gonflage du pneumatique P de manière à caler ses talons Te et Ti dans leurs puits respectifs 15.

Une première variante de réalisation est illustrée sur la figure 14 et qui est particulièrement bien adaptée pour un pneumatique P à ratio bas, c'est-à-dire dont la hauteur entre la jante 1 et le pneumatique P est réduite par rapport à des pneumatiques classiques. Dans ce cas, l'anneau du dispositif de roulage à plat 5 s'étend sur une largeur plus importante, mais son principe de montage et de fixation reste le même que celui précédemment décrit.

Dans une seconde variante illustrée sur la figure 15, les seconds moyens de fixation 35 des secteurs 20 sur la jante 1 pour reprendre les efforts transversaux ne comprennent qu'un seul talon 37a au niveau de la partie radialement interne A des secteurs 20 et une seule gorge 37b ménagée dans la seconde cavité 17 de la jante 1.

Dans ces deux variantes de réalisation, la face d'extrémité de la partie radialement interne A des secteurs 20 est évidée de manière à alléger le dispositif de roulage à plat 5.

Le bossage périphérique intermédiaire 19 qui sépare les deux cavités 11 et 17 de la jante 1 peut être continu ou discontinu. Dans ce dernier cas, il est alors constitué d'une série de plots et les secteurs 20 de l'anneau doivent être montés sur la jante 1 de telle manière que les cales 27 soient en vis-à-vis des plots.

## Revendications

1. Système de roulage à plat pour véhicule automobile, comprenant une jante monobloc non standard (1) présentant au moins une première cavité périphérique ou creux de jante (11) pour permettre le montage d'un pneumatique (P) sur la jante (1) et une seconde cavité périphérique (17) qui est séparée de la première cavité (11) par un bossage périphérique intermédiaire (19), et un dispositif de roulage à plat (5) destiné à être monté sur la jante (1) et à l'intérieur du pneumatique (P), ce dispositif (5) étant constitué d'un anneau rigide scindé en au moins deux éléments en arc de cercle ou secteurs (20), **caractérisé en ce que** chaque secteur (20) présentant une partie radialement interne (A) destinée à venir se loger dans la seconde cavité (17), le système comprenant également des moyens de fixation des secteurs (20) dans la seconde cavité (17) de la jante (1), **caractérisé en ce que** les moyens de fixation des secteurs (20) de l'anneau sur la jante (1) comprennent au moins des premiers moyens (25) pour reprendre les efforts latéraux qui auraient tendance à déplacer les secteurs (20) latéralement à l'intérieur de la seconde cavité (17) de la jante (1), et **en ce que** ces premiers moyens de fixation (25) sont constitués par des cales (27) propres à pénétrer dans la seconde cavité (17) de la jante (1) afin de s'engager entre le bossage intermédiaire (19) et au moins un secteur (20) de l'anneau pour agir à la manière d'un coin et immobiliser latéralement l'ensemble des secteurs (20) de l'anneau à l'intérieur de la seconde cavité (17) de la jante (1).

2. Système de roulage à plat selon la revendication 1, **caractérisé en ce que** les cales (27) sont portées par les secteurs (20) de l'anneau et sont montées pivotantes.

3. Système de roulage à plat selon la revendication 2, **caractérisé en ce que** chaque cale (27) présente une face d'appui (27a) destinée à venir s'appliquer sur la face latérale externe d'un secteur (20) de l'anneau, et une face opposée (27b) qui présente une pente qui diminue progressivement l'épaisseur de la cale (27) d'une extrémité vers l'autre pour former un coin.

4. Système de roulage à plat selon la revendication 3, **caractérisé en ce que** chaque cale (27), dans sa partie de plus grande épaisseur, est percée de part en part par une ouverture (28) qui reçoit un élément (30) pour la fixer au secteur (20) d'une part et, le cas échéant, la serrer d'autre part.

5. Système de roulage à plat selon la revendication 3 ou 4, **caractérisé en ce qu'**une cale (27) portée par un secteur (20) chevauche simultanément un secteur consécutif audit secteur pour immobiliser au moins en partie les deux secteurs (20) dans la seconde cavité (17) de la jante (1).

6. Système de roulage à plat selon l'une quelconque des revendications précédentes, **caractérisé en ce que** les moyens de fixation des secteurs (20) de l'anneau sur la jante (1) comprennent des seconds moyens (35) pour reprendre les efforts transversaux qui auraient tendance à faire sortir les secteurs (20) de l'anneau hors de la seconde cavité (17) de la jante (1).

7. Système de roulage à plat selon la revendication 6, **caractérisé en ce que** les seconds moyens de fixation (35) des secteurs (20) de l'anneau sur la jante (1) comprennent au moins un talon (37a) prévu dans la partie radialement interne (A) de chaque secteur (20), et une gorge (37b) ménagée dans la seconde cavité (17) de la jante (1) et dans laquelle vient s'engager ledit talon (37a).

8. Système de roulage à plat selon la revendication 6, **caractérisé en ce que** les seconds moyens de fixation (35) des secteurs (20) de l'anneau sur la jante (1) comprennent deux talons (37a, 39a) prévus dans la partie radialement interne (A) de chaque secteur (20), et deux gorges (37b, 39b) ménagées dans la seconde cavité (17) de la jante (1) et dans lesquelles viennent respectivement s'engager les deux talons (37a, 39a).

9. Système de roulage à plat selon la revendication 7 ou 8, **caractérisé en ce qu'**un joint torique (J) est engagé dans au moins une gorge (37b, 39b) de la seconde cavité (17) de la jante (1).
